**Europäisches Patentamt**

**European Patent Office**

**Office européen des brevets**

(19)

(11) Veröffentlichungsnummer: **0 157 228**
**B1**

(12) **EUROPÄISCHE PATENTSCHRIFT**

(45) Veröffentlichungstag der Patentschrift: **16.05.90**

(21) Anmeldenummer: **85102726.8**

(22) Anmeldetag: **09.03.85**

(51) Int. Cl.⁵: **B 60 Q 3/04,** G 02 F 1/133

(54) Anzeigevorrichtung.

(30) Priorität: **04.04.84 DE 3412636**

(43) Veröffentlichungstag der Anmeldung:
**09.10.85 Patentblatt 85/41**

(45) Bekanntmachung des Hinweises auf die
Patenterteilung:
**16.05.90 Patentblatt 90/20**

(84) Benannte Vertragsstaaten:
**DE FR GB IT SE**

(56) Entgegenhaltungen:
**DE-A-2 902 745**
**DE-A-2 944 537**
**DE-A-3 029 122**
**US-A-4 218 281**

(73) Patentinhaber: **VDO Adolf Schindling AG**
**Gräfstrasse 103**
**D-6000 Frankfurt/Main 90 (DE)**

(72) Erfinder: **Sell, Gerhard**
**Im Kirchfeld 13**
**D-6384 Schmitten 1 (DE)**
Erfinder: **Heinrich, Kurt**
**Gartenstrasse 12**
**D-6390 Usingen 5 (DE)**
Erfinder: **Gerhardt, Albrecht**
**Taunusstrasse 47**
**D-6231 Schwalbach (DE)**

(74) Vertreter: **Klein, Thomas, Dipl.-Ing. (FH)**
**Sodener Strasse 9 Postfach 6140**
**D-6231 Schwalbach a. Ts. (DE)**

Courier Press, Leamington Spa, England.

EP 0 157 228 B1

**Beschreibung**

Die Erfindung betrifft eine Anzeigevorrichtung mit einem transparenten Anzeigefeld, durch das Umgebungslicht auf der gesamten Fläche des Auzeigefeldes von der einem Beobachter abgewandten Seit zu der dem Beobachter zugewandten Seite hindurchtretbar und auf dem Zeichen und/oder Symbole vor einem hellen Hintergrund darstellbar sind (siehe z.B. DE—A—3029122).

Bei derartigen z.B. als transmissive Flüssigkristallanzeigen ausgebildeten Anzeigevorrichtungen ist es bekannt, durch das hindurchscheinende Umgebungslicht, oder durch eine hinter der Flüssigkristallanzeige angeordnete Lichtquelle, die an der Zelle angesteuerten Zeichensymbole sichtbar zu machen. Im ersten Fall ist eine Ablesbarkeit vom Umgebungslicht abhängig, während im zweiten Fall eine hinter der Flüssigkristallanzeige angeordnete Lichtquelle aufwendig ist.

Es ist daher Aufgabe der Erfindung eine Anzeigevorrichtung nach dem Oberbegriff zu schaffen, die auf einfache Weise sowohl durch Umgebungslicht als auch durch Beleuchtung von einer Lichtquelle eine einwandfreie Ablesbarkeit ermöglicht.

Diese Aufgabe wird erfindungsgemäß dadurch gelöst, daß das Anzeigefeld auf der dem Beobachter abgewandten Seite eine Lichtleitplatte aus transparentem Werkstoff aufweist, in der Licht zerstreuende Partikel verteilt sind und in die Licht einer künstlichen Lichtquelle derart einleitbar ist, daßes etwa quer zur Ebene des Anzeigefeldes in den das Anzeigefeld abdeckenden Bereich der Lichtleitplatte hineinflutet. Je nach den vorhandenen Lichtverhältnissen kann mit dem von der dem Beobachter abgewandten Seite her durch das Anzeigefeld hindurchscheinenden Licht oder mit dem Licht der Lichtquelle die Ablesbarkeit erzielt werden.

Besonders vorteilhaft ist diese Anzeigevorrichtung, wenn sie auf dem Armaturenbrett eines Kraftfahrzeugs angeordnet ist, wo sie von dem Licht außerhalb des Kraftfahrzeugs von der Rückseite her gut durchleuchtet wird und bei Tag keine Zusatzbeleuchtung benötigt. Eine im Reflexionsbetrieb betriebene Flüssigkristallanzeige — wie sie aus der US—A—4218281 bekannt ist — würde an dieser Einbaustelle auch bei Tag des Einschalten einer Zusatzbeleuchtung benötigen, da innerhalb des Kraftfahrzeugs die Lichtverhältnisse für eine gute Ablesbarkeit nicht ausreichend sind. Sind die darzustellenden Zeichen und Symbole dunkel vor hellem Hintergrund darstellbar, so bewirkt die helle Anzeigefläche das Erscheinungsbild einer leichten Konstruktion.

Dies wird noch erhöht, wenn die zerstreuenden Partikel transparente Partikel sind, wobei die zerstreuenden Partikel Glaspartikel sein können. Dadurch sind die nicht durch Zeichen oder Symbole abgedeckten Bereiche das Anzeigefelds bei Beleuchtung durch das Umgebungslicht klar transparent, so daß sich das Erscheinungsbild einer Skelettbauweise ergibt.

Bei geringem Umgebungslicht und eingeschalteter Lichtquelle ist die Lichtleitplatte ein diffus hell scheinender Hintergrund, vor dem die Zeichen und Symbole deutlich und konturenscharf erkennbar sind.

Ist das Umgebungslicht ausreichend, so ist die Lichtleitplatte auch bei eingeschalteter Lichtquelle klar transparent.

In einfacher und platzsparender Weise kann die Lichtleitplatte außerhalb ihres den Sichtbereich des Anzeigefelds überdeckenden Bereichs eine Ausnehmung aufweisen, in die die Lichtquelle hineinragt.

Um eine gute Lichtverteilung über die ganze Breite der Lichtleitplatte zu erhalten, kann der lichtquellenseitige Bereich der Lichtleitplatte außerhalb der Überdeckung des Anzeigefelds eine umlaufende Begrenzungskante aufweisen, die eine Umlenkfläche zum Umlenken des von der Lichtquelle ausgehenden Lichts in den die Zelle überdeckenden Bereich bildet. Ein zusätzlicher Lichtleiter zur Verteilung des Lichts ist somit nicht nötig.

Ist die Entstehungsstelle des Lichts der Lichtquelle außerhalb der Ebene der Lichtleitplatte angeordnet, so wird vermieden, daß die Ausleuchtung der Lichtleitplatte in der Nähe der Lichtquelle stärker ist als in den anderen Bereichen. In einer vorteilhaften Ausbildung kann die Anzeigevorrichtung eine Flüssigkristallanzeige mit einer transmissiven Flüssigkristallzelle sein, wobei auf der dem Beobachter abgewandten Seite der Flüssigkristallzelle die Lichtleitplatte angeordnet ist.

Um bei eingeschalteter Lichtquelle eine direkte Bestrahlung der Zelle zu vermeiden, kann zwischen der Zelle und der Lichtleitplatte ein den Sichtbereich der Zelle umschließender Rahmen angeordnet sein.

Sind Zelle und/oder Rahmen und/oder Lichtleitplatte in Führungen eines Gehäuses einsetzbar, so wird eine einfache Montage ermöglicht. Gleichzeitig kann auf besondere Befestigungselemente verzichtet werden.

Das Gehäuse kann eine Aufnahme der Lichtquelle aufweisen.

Zum Lichtdurchtritt besitzt vorzugsweise das Gehäuse im Sichtbereich der Zelle eine durchgehende Fensteröffnung. Bei Nichtbenutzung der Flüssigkristallanzeige kann die Fensteröffnung auf der dem Beobachter zugewandten und/oder abgewandten Seite verschließbar sein.

Zur Befestigung der Flüssigkristallanzeige, z.B. auf der Ablage im Bereich des Armaturenbretts, kann das Gehäuse einen Ständer besitzen. Um Wegklappen aus der senkrechten Betriebsstellung in die waagrechte Ruhelage kann das Gehäuse mittels eines Scharniers mit dem Ständer verbunden sein.

In einer anderen vorteilhaften Ausbildung können auf dem Anzeigefeld auf der dem Beobachter zugewandten Seite undurchsichtige feste Zeichen und/oder Symbole angeordnet sein, denen ein beweglicher Zeiger zugeordnet ist, wobei sich ein besonders guter Kontrast une eine gute Konturenschärfe ergibt, wenn die Zeichen und/oder Symbole auf der Lichtleitplatte angeordnet sind.

Die Zeichen und/oder Symbole können dabei eine Skala bilden und der Zeiger schwenkbar angeordnet sein.

Ist der umlaufende Rand der Lichtleitplatte von einem Rahmen umschlossen, so kann dort bei eingeschalteter Lichtquelle kein störendes Licht austreten. Ist dabei auch noch die Innenseite des Rahmens reflektierend ausgebildet, wird das Licht in die Lichtleitplatte zurückreflektiert. Dies kann auch erreicht werden, indem der umlaufende Rand der Lichtleitplatte mit einer entsprechenden Beschichtung versehen wird.

Die Anzeigevorrichtung kann auf dem Armaturenbrett eines Kraftfahrzeugs anordenbar sein.

Ein besonderer Vorteil der erfindungsgemäßen Anzeigevorrichtungen besteht darin, daß das bei eingeschalteter Lichtquelle in die Lichtleitplatte engeleitetes Licht zwar einen diffus hell scheinenden Hintergrund für die Zeichen und Symbole bildet, aber eine den Beobachter blendende Lichtstrahlung vermieden wird. Dies ist besonders wichtig bei der Anwendung im Sichtbereich des Fahrers in einem Kraftfahrzeug.

Ausführungsbeispiele der Erfindung sind in der Zeichnung dargestellt und werden im folgenden näher beschrießen. Es zeigen

Figur 1 eine Ansicht eines ersten Ausführungsbeispiels einer Anzeigevorrichtung entlang der Linie II—II in Figur 2,

Figur 2 eine Schnittansicht der Anzeigevorrichtung entlang der Linie I—I in Figur 1 in Explosionsdarstellung,

Figur 3 eine perspektivische Ansicht eines zweiten Ausführungsbeispiels einer Anzeigevorrichtung,

Figur 4 eine Schnittansicht der Anzeigevorrichtung nach Figur 3 entlang der Linie III—III.

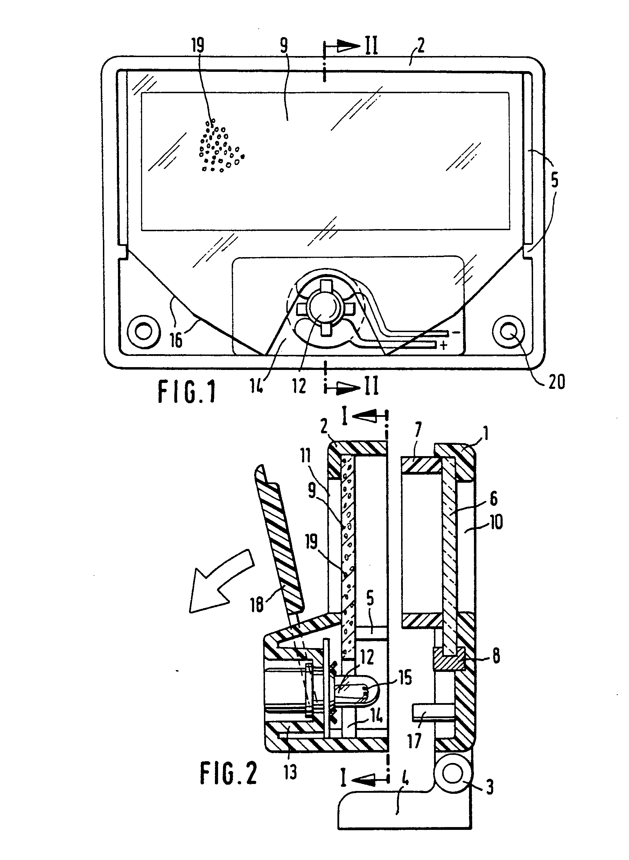

Die in den Figuren 1 und 2 dargestellte Anzeigevorrichtung ist eine Flüssigkristallanzeige, die ein Gehäuse besitzt, das aus zwei miteinander verbindbaren Gehäuseschalen 1 und 2 besteht. An der Gehäuseschale 1 ist über ein Scharnier 3 ein Ständer 4 befestigt.

Die Gehäuseschale 2 ist in ihrem Innenbereich mit Führungen 5 versehen, in die in zusammengebautem Zustand eine Flüssigkristallzelle 6 sowie auf der Flüssigkristallzelle 6 ein Rahmen 7 eingesetzt und gehalten ist. Im Bereich der Flüssigkristallzelle 6 weist die Gehäuseschale 1 ein Fenster 10 auf.

In dem dargestellten eingesetzten Zustand ist die Flüssigkristallzelle 6 mit ihrem unteren Bereich mit einer in der Gehäuseschale 1 befestigten Kontaktleiste 8 in Verbindung, über die die Flüssigkristallzelle 6 ansteuerbar ist.

In den Führungen 5 ist in der Gehäuseschale 2 auch eine Lichtleitplatte 9 eingesetzt, die einen Bereich eines Fensters 11 in der Gehäuseschale 2 überdeckt, das dem Fenster 10 gegenüberliegt. Im zusammengebauten Zustand liegen sowohl die Flüssigkristallzelle 6 als auch die Lichtleitplatte 9 an einer Stirnseite des Rahmens 7 an und bilden im Bereich der Fenster 10 und 11 ein transparentes Anzeigefeld. Die Lichtleitplatte 9 erstreckt sich an ihrer Unterseite aus diesem Sichtbereich heraus in den Bereich einer Lichtquelle 12, die in einer Aufnahme 13 der Gehäuseschale 2 angeordnet ist. Dabei ragt die Lichtquelle 12 — eine Glühlampe — in eine Ausnehmung 14 der Lichtleitplatte 9 hinein und zwar derart, daß die Entstehungsstelle 15 des Lichts der Lichtquelle 12 außerhalb der Ebene der Lichtleitplatte 9 liegt.

Die umlaufende Begrenzungskante des lichtquellenseitigen Bereiches der Lichtleitplatte 9 ist als Umlenkfläche 16 ausgebildet, so daß die darauf auftreffenden Lichtstrahlen der Lichtquelle 12 in gleichmäßiger Verteilung in den Sichtbereich der Lichtleitplatte 9 umgelenkt werden.

Durch an der Gehäuseschale 1 ausgebildete Zapfen 17, die in entsprechende, an der Gehäuseschale 2 ausgebildete Ösen 20 einsteckbar und einrastbar sind, kann die Flüssigkristallanzeige nach dem Einsetzen der Lichtquelle 12 sowie von Lichtleitplatte 9, Rahmen 7 und Flüssigkristallzelle 6 durch einfaches Zusammenstecken montiert werden, wobei keine zusätzlichen Halterungselemente für die letztgenannten Bauteile erforderlich sind. Bei Nichtbenutzung der Flüssigkristallanzeige kann das Fenster 11 durch eine an der Gehäuseschale 2 angelenkte Klappe 18 verschlossen werden.

Die Lichtleitplatte 9 besteht aus einem klar transparenten Werkstoff, in dem ebenfalls klar transparente Glaspartikel 19 verteilt sind, die bei Keinem oder geringem Umgebungslicht und eingeschalteter Lichtquelle 12 lichtzerstreuend sind. Dadurch erscheinen für einen Beobachter die in der Flüssigkristallzelle angesteuerten Zeichen und Symbole dunkel vor einem gleichmäßig diffus hellen Hintergrund.

Bei ausgeschalteter Lichtquelle 12 und ausreichendem Umgebungslicht erscheinen die angesteuerten Zeichen und Symbole in einem hellen klar durchsichtigen Fenster.

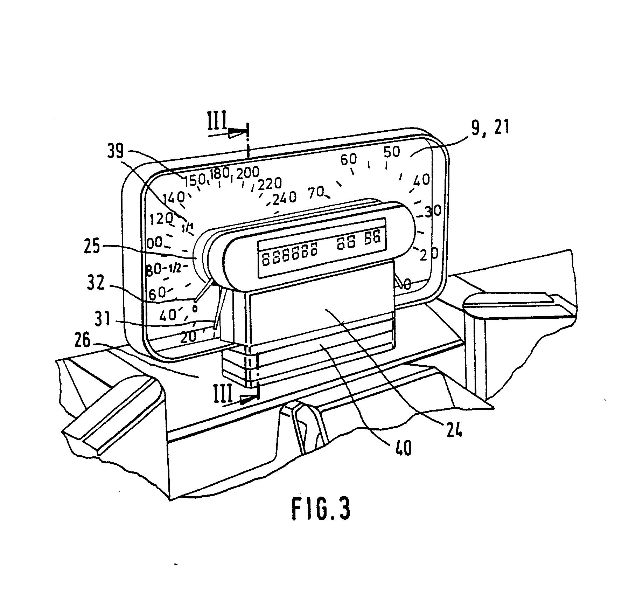

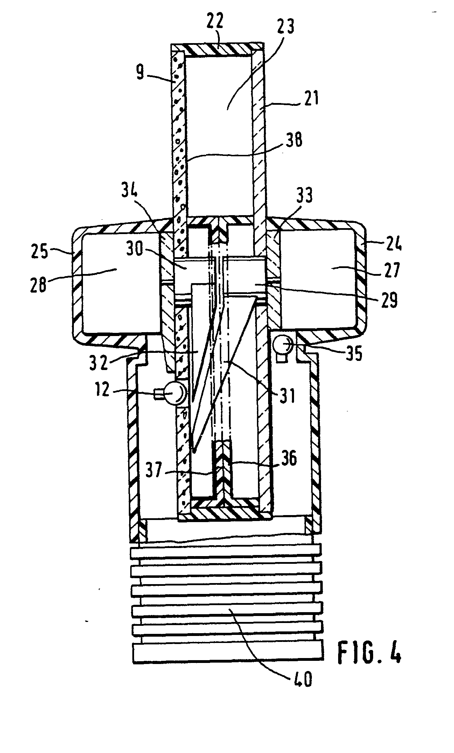

Die in den Figuren 3 und 4 dargestellte Anzeigevorrichtung weist eine Lichtleitplatte 9 auf, die genauso aufgebaut ist wie die Lichtleitplatte 9 der Figuren 1 und 2. Sie besitzt ebenfalls außerhalb des Sichtbereichs eine Ausnehmung 14, in die eine Lichtquelle 12 hineinragt.

In einem Abstand zur Lichtleitplatte 9 ist eine transparente Abdeckplatte 21 gleicher Kontur wie die Lichtleitplatte 9 angeordnet. Ein die umlaufenden Ränder von Lichtleitplatte 9 und Abdeckplatte 21 umschließender Rahmen 22 verschließt den zwischen diesen beiden Platten gebildeten Raum 23. Lichtleitplatte 9 und Abdeckplatte 21 bilden zusammen ein transparentes Anzeigefeld.

Eine rechte Gehäuseschale 24 und eine linke Gehäuseschale 25 nehmen zwischen sich den mittleren unteren Teil des Anzeigefelds auf und bilden gleichzeitig einen Ständer, mit dem die Anzeigvorrichtung auf einem Armaturenbrett 26 eines Kraftfahrzeugs im direkten Sichtbereich des Fahrers so angeordnet ist, daß das durch die nicht dargestellte Windschutzscheibe in das Innere des Kraftfahrzeugs eintretende Licht das Anzeigefeld durchstrahlt.

In jeder Gehäuseschale 24 und 25 ist ein Meßwerk 27 und 28 angeordnet, deren Achsen koaxial zueinander in den Raum 23 ragen und jeweils eine Nabe 29 und 30 mit daran angeordneten schwenkbaren Zeigern 31 und 32 tragen.

Über Lichtleiter 33 und 34, die jeweils zwischen einem Meßwerk 27 bzw. 28 und der Nabe 29 bzw. 30 angeordnet sind, wird Licht von der Lichtquelle 12 bzw. 35 über den Innenbereich der Naben 29 bzw. 30 in die transparenten Zeiger 31 bzw. 32 zu deren Beleuchtung eingekoppelt.

Um störende Lichtaustritte aus den Gehäuseschalen 24 und 25 zu vermeiden, sind die in die Gehäuseschalen 24 und 25 ragenden Teile der Lichtleitplatte 9 und der Abdeckplatte 21 durch in dem Raum 23 angeordnete Abdeckkappen 36 und 37 weitgehend abgedeckt.

Die Zeiger 31 und 32 sind beide zur Lichtleitplatte 9 gerichtet, auf deren dem Beobachter zugewandten Seite 38 undurchsichtige Skalen 39 bildende Zeichen aufgedruckt sind.

An dem zu dem Armaturenbrett 26 gerichteten Ende der Gehäuseschalen 24 und 25 ist ein Balg 40 mit seinem einen Ende angeordnet, der mit seinem anderen Ende am Armaturenbrett 26 befestig ist. Dadurch ist die Anzeigevorrichtung schwenkbar.

Genauso wie bei dem Ausführungsbeispiel der Figuren 1 und 2 erscheinen bei eingeschalteter Lichtquelle 12 die Zeichen und Skalen 39 dunkel vor einem gleichmäßig diffus hellen Hintergrund, während sie bei ausgeschalteter Lichtquelle 12 und ausreichendem Umgebungslicht skelettartig in einem hellen, klar durchsichtigen Fenster zu sehen sind.

Eine Anzeigevorrichtung entsprechend der Darstellung in Figur 3 kann auch derart ausgebildet sein, daß das Anzeigefeld von einer transmissiven Flüssigkristallzelle gebildet wird und die Skalen ansteuerbar sind. So könnte die radial äubere der Skalen 39 von einer Geschwindigkeitsskala im Miles/h in eine Geschwindigkeitsskala in km/h umschaltbar sein, wobei aber beiden Skalen immer der Zeiger 31 zugeordnet wäre.

**Patentansprüche**

1. Anzeigevorrichtung mit einem transparenten Anzeigefeld, durch das Umgebungslicht auf der gesamten Fläche des Anzeigefeldes von der einem Beobachter abgewandten Seite zu der dem Beobachter zugewandten Seite hindurchtretbar und auf dem Zeichen und/oder Symbole vor einem hellen Hintergrund darstellbar sind, dadurch gekennzeichnet, daß das Anzeigefeld auf der dem Beobachter abgewandten Seite eine Lichtleitplatte (9) aus transparentem Werkstoff aufweist, in der Licht zerstreuende Partikel (19) verteilt sind und in die Licht einer künstlichen Lichtquelle (12) derart einleitbar ist, daß es etwa quer zur Ebene des Anzeigefeldes in den das Anzeigefeld abdeckenden Bereich der Lichtleitplatte hineinflutet.

2. Anzeigevorrichtung nach Anspruch 1, dadurch gekennzeichnet, daß die zerstreuenden Partikel Transparentpartikel sind.

3. Anzeigevorrichtung nach Anspruch 2, dadurch gekennzeichnet, daß die zerstreuenden Partikel Glaspartikel (19) sind.

4. Anzeigevorrichtung nach einem der vorhergehenden Ansprüche, dadurch gekennzeichnet, daß die Lichtleitplatte (9) außerhalb ihres den Sichtbereich des Anzeigefelds überdeckeden Bereichs eine Ausnehmung (14) aufweist, in die die Lichtquelle (12) hineinragt.

5. Anzeigevorrichtung nach Anspruch 4, dadurch gekennzeichnet, daß der lichtquellenseitige Bereich der Lichtleitplatte (9) außerhalb der Überdeckung des Anzeigefelds eine umlaufende Begrenzungskante aufweist, die eine Umlenkfläche (16) zum Umlenken des von der Lichtquelle (12) ausgehenden Lichts in den das Anzeigefeld überdeckenden Bereichs bildet.

6. Anzeigevorrichtung nach einem der vorhergehenden Ansprüche, dadurch gekennzeichnet, daß die Entstehungsstelle (15) des Lichts der Lichtquelle (12) außerhalb der Ebene der Lichtleitplatte (9) angeordnet ist.

7. Anzeigevorrichtung nach einem der vorhergehenden Ansprüche, dadurch gekennzeichnet, daß die Anzeigevorrichtung eine Flüssigkristallanzeige mit einer transmissiven Flüssigkristallzelle (6) ist, wobei auf der dem Beobachter abgewandten Seite der Flüssigkristallzelle (6) die Lichtleitplatte (9) angeordnet ist.

8. Anzeigevorrichtung nach einem der vorhergehenden Ansprüche, dadurch gekennzeichnet, daß zwischen der Zelle (6) und der Lichtleitplatte (9) ein den Sichtbereich der Zelle (6) umschließender Rahmen (7) angeordnet ist.

9. Anzeigevorrichtung nach einem der vorhergehenden Ansprüche, dadurch gekennzeichnet, daß Zelle (6) und/oder Rahmen (7) und/oder Lichtleitplatte (9) in Führungen (5) eines Gehäuses (1, 2) einsetzbar sind.

10. Anzeigevorrichtung nach einem der vorhergehenden Ansprüche, dadurch gekennzeichnet, daß das Gehäuse (1, 2) eine Aufnahme (13) der Lichtquelle (12) aufweist.

11. Anzeigevorrichtung nach einem der vorhergehenden Ansprüche, dadurch gekennzeichnet, daß das Gehäuse (1, 2) im Sichtbereich der Zelle (6) eine durchgehende Fensteröffnung (10, 11) besitzt.

12. Anzeigevorrichtung nach Anspruch 11, dadurch gekennzeichnet, daß die Fensteröffnung (10, 11) auf der dem Beobachter zugewandten und/oder abgewandten Seite verschließbar ist.

13. Anzeigevorrichtung nach einem der vorhergehenden Ansprüche, dadurch gekennzeichnet, daß das Gehäuse (1, 2) einen Ständer (4) besitzt.

14. Anzeigevorrichtung nach Anspruch 13, dadurch gekennzeichnet, daß das Gehäuse (1, 2) mittels eines Scharniers (3) mit dem Ständer (4) verbunden ist.

15. Anzeigevorrichtung nach einem der Ansprüche 1 bis 6, dadurch gekennzeichnet, daß auf dem Anzeigefeld auf der dem Beobachter zugewandten Seite undurchsichtige feste Zeichen und/oder Symbole angeordnet sind, denen ein beweglicher Zeiger (31, 32) zugeordnet ist.

16. Anzeigevorrichtung nach Anspruch 15, dadurch gekennzeichnet, daß die Zeichen und/oder Symbole auf der Lichtleitplatte (9) angeordnet sind.

17. Anzeigevorrichtung nach Anspruch 15, dadurch gekennzeichnet, daß die Zeichen und/oder Symbole eine Skala (39) bilden.

18. Anzeigevorrichtung nach Anspruch 15, dadurch gekennzeichnet, daß der Zeiger (31, 32) schwenkbar angeordnet ist.

19. Anzeigevorrichtung nach Anspruch 15, dadurch gekennzeichnet, daß der umlaufende Rand der Lichtleitplatte (9) von einem Rahmen (22) umschlossen ist.

20. Anzeigevorrichtung nach Anspruch 19, dadurch gekennzeichnet, daß die Innenseite des Rahmens (20) reflektierend ausgebildet ist.

21. Anzeigevorrichtung nach einem der vorhergehenden Ansprüche, dadurch gekennzeichnet, daß die Anzeigevorrichtung auf dem Armaturenbrett (26) eines Kraftfahrzeugs anordenbar ist.

22. Anzeigevorrichtung nach einem der vorhergehenden Ansprüche, dadurch gekennzeichnet, daß das Anzeigefeld eine transmissive Flüssigkristallanzeige mit ansteuerbaren Zeichen und/oder Symbolen ist, denen ein beweglicher Zeiger zugeordnet ist.

23. Anzeigevorrichtung nach Ansprüch 22, dadurch gekennzeichnet, daß die Zeichen und/oder Symbole eine Skala bilden.

24. Anzeigevorrichtung nach Anspruch 23, dadurch gekennzeichnet, daß einem beweglichen Zeiger jeweils eine von mehreren wahlweise ansteuerbaren Skalen zuordenbar ist.

**Revendications**

1. Dispositif de visualisation comportant une zone de visualisation transparente, à travers laquelle la lumière ambiante peut pénétrer, sur toute la surface de la zone de visualisation, depuis le côté opposé à l'observateur, en direction du côté situé de côté de l'observateur et sur laquelle des caractères et/ou des symboles peuvent être représentés devant un fond clair, dispositif caractérisé en ce que la zone de visualisation présente, du côté opposé à l'observateur, une plaque (9) conductrice de la lumière, en matériau transparent, dans laquelle sont réparties des particules (19) qui diffusent la lumière et dans laquelle on peut amener la lumière d'une source artificielle (12) de lumière, de façon telle qu'elle soit à peu près alignée transversalement au plan de la zone de visualisation, dans la région de la plaque conductrice de la lumière qui recouvre la zone de visualisation.

2. Dispositif de visualisation selon la revendication 1, caractérisé en ce que les particules qui diffusent la lumière sont des particules transparentes.

3. Dispositif de visualisation selon la revendication 2, caractérisé en ce que les particules qui diffusent la lumière sont des particules de verre (19).

4. Dispositif de visualisation selon l'une des revendications précédentes, caractérisé en ce que la plaque (9) conductrice de la lumière présente, en dehors de sa région qui recouvre le champ de vision de la zone de visualisation, un évidement (14) dans lequel pénètre la source lumineuse (12).

5. Dispositif de visualisation selon la revendication 4, caractérisé en ce que la région de la plaque (9) conductrice de la lumière située du côté de la source lumineuse présente, en dehors du recouvrement de la zone de visualisation, une arête périphérique de limitation, qui forme une surface (16) de changement de direction pour envoyer, dans la région qui recouvre la zone de visualisation, la lumière provenant de la source lumineuse (12).

6. Dispositif de visualisation selon l'une des revendications précédentes, caractérisé en ce que la position (15) d'émission de la lumière par la source lumineuse (12) est située en dehors du plan de la plaque (9) conductrice de la lumière.

7. Dispositif de visualisation selon l'une des revendications précédentes, caractérisé en ce que le dispositif de visualisation est un visuel à cristaux liquides comprenant une cellule (6) à cristaux liquides présentant une transmittance, étant précisé que la plaque (9) conductrice de la lumière est disposée du côté de la cellule (6) à cristaux liquides opposé à l'observateur.

8. Dispositif de visualisation selon l'une des revendications précédentes, caractérisé en ce qu'entre la cellule (6) et la plaque (9) conductrice de la lumière, est disposé un cadre (7), qui entoure le champ de vision de la cellule (6).

9. Dispositif de visualisation selon l'une des revendications précédentes, caractérisé en ce que la cellule (6) et/ou le cadre (7) et/ou la plaque (9) conductrice de la lumière peuvent être insérés dans des organes de guidage (5) faisant partie d'un boîtier (1, 2).

10. Dispositif de visualisation selon l'une des revendications précédentes, caractérisé en ce que le boîtier (1, 2) présente un réceptacle (13) pour la source lumineuse (12).

11. Dispositif de visualisation selon l'une des revendications précédentes, caractérisé en ce que le boîtier (1, 2) possède, dans le champ de vision de la cellule (6), une ouverture de fenêtre traversante (10, 11).

12. Dispositif de visualisation selon la revendication 11, caractérisé en ce que l'on peut obturer l'ouverture de fenêtre (10, 11) du côté observateur et/ou du côté opposé à l'observateur.

13. Dispositif de visualisation selon l'une des revendications précédentes, caractérisé en ce que le boîtier (1, 2) possède un support (4).

14. Dispositif de visualisation selon la revendication 13, caractérisé en ce que le boîtier (1, 2) est relié au support (4) au moyen d'une charnière (3).

15. Dispositif de visualisation selon l'une des revendications 1 à 6, caractérisé en ce que sur la zone de visualisation, du côté observateur, sont disposés des caractères et/ou des symboles fixes non transparents auxquels correspond une aiguille (31, 32) mobile.

16. Dispositif de visualisation selon la revendication 15, caractérisé en ce que les caractères et/ou les symboles sont disposés sur la plaque (9) conductrice de la lumière.

17. Dispositif de visualisation selon la revendication 15, caractérisé en ce que les caractères et/ou les symboles forment une échelle graduée (39).

18. Dispositif de visualisation selon la revendication 15, caractérisé en ce que l'aiguille (31, 32) est disposée avec liberté de pivoter.

19. Dispositif de visualisation selon la revendication 15, caractérisé en ce que le bord périphérique de la plaque (9) conductrice de la lumière est entouré d'un cadre (22).

20. Dispositif de visualisation selon la revendication 19, caractérisé en ce que la face intérieure du cadre (30) est prévue réfléchissante.

21. Dispositif de visualisation selon l'une des revendications précédentes, caractérisé en ce que le dispositif de signalisation peut être disposé sur le tableau de bord (26) d'un véhicule motorisé.

22. Dispositif de visualisation selon l'une des revendications précédentes, caractérisé en ce que la zone de visualisation est une visualisation à cristaux liquides présentant une transmittance, avec des caractéres et/ou des symboles qui peuvent être activés et auxquels correspond une aiguille mobile.

23. Dispositif de visualisation selon la revendication 22, caractérisé en ce que les caractères et/ou les symboles forment une échelle graduée.

24. Dispositif de visualisation selon la revendication 23, caractérisé en ce qu'à une aiguille mobile, on peut respectivement faire correspondre l'une de plusieurs échelles graduées qui peuvent être activées au choix.

**Claims**

1. Indicator device having a transparent display panel through which, over the entire area of said display panel, ambient light can pass from the side remote from an observer to the side facing towards the observer, and on which signs and/or symbols can be represented before a bright background, characterised in that the display panel has at the side remote from the observer a light guide plate (9) made of transparent material, in which light-dispersing particles (19) are distributed, and into which light from an artificial light source (12) is so introduceable that it flows substantially transversely with respect to the plane of the display panel into that region of the light guide plate which covers the display panel.

2. Indicator device according to claim 1, characterised in that the dispersing particles are transparent particles.

3. Indicator device according to claim 2, characterised in that the dispersing particles are glass particles (19).

4. Indicator device according to one of the preceding claims, characterised in that the light guide plate (9) comprises, outside of its region covering the viewing portion of the display panel, a recess (14) into which the light source (12) projects.

5. Indicator device according to claim 4, characterised in that the region of the light guide plate (9) which is in the vicinity of the light source, outside of the covering of the display panel, comprises an encircling boundary edge which forms a deflecting surface (16) for deflecting the light emanating from the light source (12) into the region covering the display panel.

6. Indicator device according to one of the preceding claims, characterised in that the place (15) at which the light of the light source (12) is produced is situated outside of the plane of the light guide panel (9).

7. Indicator device according to one of the preceding claims, characterised in that the indicator device is a liquid-crystal display with a transmissive liquid-crystal cell (6), the light guide plate (9) being situated at that side of the liquid-crystal cell (6) which is remote from the observer.

8. Indicator device according to one of the preceding claims, characterised in that between the cell (6) and the light guide plate (9) there is arranged a frame (7) which surrounds the viewing region of the cell (6).

9. Indicator device according to one of the preceding claims, characterised in that cell (6) and/or frame (7) and/or light guide plate (9) are insertable into guides (5) of a housing (1, 2).

10. Indicator device according to one of the preceding claims, characterised in that the housing (1, 2) has a holder (13) for the light source (12).

11. Indicator device according to one of the preceding claims, characterised in that the housing (1, 2) has a through window opening (10, 11) in the viewing region of the cell (6).

12. Indicator device according to claim 11, characterised in that the window opening (10, 11) is adapted to be closed at the side facing towards the observer and/or the side remote from the observer.

13. Indicator device according to one of the preceding claims, characterised in that the housing (1, 2) has a stand (4).

14. Indicator device according to claim 13, characterised in that the housing (1, 2) is connected to the stand (4) by means of a hinge (3).

15. Indicator device according to one of claims 1 to 6, characterised in that on the display panel, at the side facing towards the observer, non-transparent fixed signs and/or symbols are arranged with which a movable pointer (31, 32) is associated.

16. Indicator device according to claim 15, characterised in that the signs and/or symbols are arranged on the light guide plate (9).

17. Indicator device according to claim 15, characterised in that the signs and/or symbols form a scale (39).

18. Indicator device according to claim 15, characterised in that the pointer (31, 32) is pivotably arranged.

19. Indicator device according to claim 15, characterised in that the encircling rim of the light guide plate (9) is surrounded by a frame (22).

20. Indicator device according to claim 19, characterised in that the inner side of the frame (20) is made reflecting.

21. Indicator device according to one of the preceding claims, characterised in that the indicator device is adapted to be arranged on the dashboard (26) of a motor vehicle.

22. Indicator device according to one of the preceding claims, characterised in that the display panel is a transmissive liquid-crystal display with actuatable signs and/or symbols, a movable pointer being associated with these.

23. Indicator device according to claim 22, characterised in that the signs and/or symbols form a scale.

24. Indicator device according to claim 23, characterised in that one of a plurality of selectively actuatable scales in each case is associatable with a movable pointer.

FIG.1

FIG.2

FIG.3

FIG. 4